# DEMANDE DE BREVET EUROPEEN

(11) **EP 1 669 430 A1**
(43) Date de publication de la demande: **14.06.2006**
(21) Numéro de dépôt: 05300967.6
(22) Date de dépôt: 28.11.2005
(51) Int. Cl.: C09K 13/08, C03C 15/00

(54) **Composition bifluorée, procédé de préparation et utilisation pour dépolir le verre**

(30) Priorité: 10.12.2004 FR 0452925
(71) Demandeur: S.E.P.P.I.C., SOCIETE D'EXPLOITATION DE PRODUITS POUR LES INDUSTRIES CHIMIQUES, F-75007 Paris (FR)
(72) Inventeur: Bessoles, Yves, 81100 Castres (FR); Trouve, Gérard, 81100 Castres (FR); De Roulhac, Hugues Xavier, 92100 Boulogne Billancourt (FR)
(74) Mandataire: Conan, Philippe Claude

(57) **Abrégé**

Composition aqueuse comprenant au moins un agent générateur d'ions fluorure et au moins un agent viscosant, caractérisée en ce que sa viscosité mesurée à 25°C avec un viscosimètre BROKFIELD™ LVT muni d'un mobile N° 1 tournant à une vitesse de 30 tours par minute, est comprise entre 50 et 5000 mPas. Procédé pour sa préparation, composition sèche et procédé de dépolissage de verre plat.

## Description

L'invention concerne de nouvelles compositions chimiques, le procédé pour leur préparation et leur utilisation pour dépolir le verre.

On appelle dépolissage ou satinage d'une lame de verre, l'action de la rendre translucide, sans être transparente en engendrant une opacité par modification de son état de surface. Il résulte de cette action, une multitude d'aspérités de quelques microns de profondeur qui selon leur morphologie, conduisent à différents aspects macroscopiques de la surface ainsi traitée. On parle alors de verres dépolis brillants, de verres dépolis mats, de verres opaques ou de verres translucides.

Le dépolissage est généralement réalisé par sablage de la surface, quand elle est de grandes dimensions, par dépôt d'une couche mince ou par attaque chimique. Ce dernier procédé est plus particulièrement mis en oeuvre sur des petites surfaces ou sur des objets de formes plus ou moins compliquées. L'attaque chimique est réalisée à l'aide d'ions fluorure, ceux-ci réagissant avec les ions silicium du verre. L'objet en verre est immergé, de quelques secondes à quelques minutes, soit dans un bain d'acide fluorhydrique concentré, soit dans un bain acide contenant un initiateur d'ions fluorure, comme le bifluorure d'ammonium. Le verre est ensuite rincé à l'eau.

Comme exemples de compositions connues de dépolissage du verre, il y a celui décrit dans le brevet allemand publié sous le numéro 1596961 qui contient de l'acide fluorhydrique et de l'hydrogénofluorure d'ammonium, appelé par la suite bifluorure d'ammonium, et de l'eau, celui décrit dans le brevet anglais publié sous le numéro 1.276.550 comprenant de l'acide fluorhydrique, un fluorure hydrosoluble, comme le bifluorure d'ammonium et un ou plusieurs acides aliphatiques carboxyliques comprenant de un à trois atomes de carbone, substitués ou non substitués par des radicaux comprenant un ou plusieurs atomes d'halogène, groupes hydroxy ou amino, comme l'acide formique, l'acide acétique, l'acide pro-pionique, l'acide monochloroacétique, l'acide trichloroacétique ou l'acide glycolique ou encore, la composition décrite dans le brevet russe publié sous le numéro SU 1 675 244, comprenant de l'acide fluorhydrique, du bifluorure d'ammonium, du fluorosilicate de sodium, du fluorosilicate de potassium et de l'eau. La demanderesse a développé aussi une nouvelle composition à base de bifluorure de potassium et d'acide chlorhydrique, limitant l'émission d'ammoniaque qui a été décrite, ainsi que sa mise oeuvre pour des objets en verre, dans les demandes de brevet européen EP 1108773 et EP 1160213.

L'association d'un bifluorure de cation alcalin ou alcalino-terreux et d'un acide fort permet d'améliorer à la fois l'efficacité de l'attaque chimique et l'aspect du verre dépoli obtenu. Lorsque l'on s'intéresse plus spécifiquement au dépolissage du verre plat, il y a généralement de grandes surfaces à traiter ; cela nécessite le stockage de volumes importants d'acides concentrés, toxiques et corrosifs tels que les acides chlorhydrique, sulfurique et fluorhydrique et cela induit la production de grandes quantités d'effluents indésirables.

C'est pourquoi il existe aujourd'hui un besoin de développer de nouvelles compostions pouvant être mises en en oeuvre sans utilisation d'acides concentrés.

Les inventeurs ont développé un nouveau procédé de dépolissage du verre particulièrement approprié au dépolissage du verre plat qui n'a pas les inconvénients exposés ci-dessus.

Selon un premier aspect, l'invention a pour objet une composition aqueuse comprenant au moins un agent générateur d'ions fluorure et au moins un agent viscosant, caractérisée en ce que sa viscosité, mesurée à 25 °C avec un viscosimètre BROKFIELD™ LVT muni d'un mobile N° 1 tournant à une vitesse de 30 tours par minute, est comprise entre 50 et 5000 mPas.

Par agent générateur d'ions fluorures, on désigne généralement les composés bifluorés hydrosolubles.

Comme composé bifluoré hydrosoluble, on désigne dans la présente demande de brevet soit un composé, soit un mélange de composés.

Ces composés sont plus particulièrement choisis parmi le bifluorure de sodium (NaHF₂), le bifluorure de potassium (KHF₂) ou le bifluorure d'ammonium (NH₄HF₂) ou un mélange de deux ou de l'ensemble de ces trois sels. Lorsque la composition telle que définie précédemment comprend un mélange de deux ou trois composés bifluorés parmi lesquels est le bifluorure de potassium, ce dernier représente de préférence au moins 50 % en poids dudit mélange. Lorsque la composition telle que définie précédemment comprend un mélange de deux ou trois composés bifluorés parmi lesquels est le bifluorure d'ammonium, ce dernier représente de préférence au plus 15 % en poids et tout particulièrement au plus 5 % en poids dudit mélange.

La composition telle que définie précédemment peut comporter en outre une charge insoluble. Celle-ci est plus particulièrement choisie parmi la baryte, le gypse, les sels fluorés insolubles, et plus particulièrement le fluorure de calcium, les fluorosilicates insolubles et plus particulièrement le fluorosilicate de calcium, de potassium ou le fluorosilicate de sodium, le phosphate de calcium, le sulfate de calcium, les oxydes minéraux, en particulier les oxydes de fer, de zinc, d'aluminium ou de titane, la lignine, l'amidon, les polymères d'oxyde d'éthylène, les polymères d'oxyde de propylène ou les polymères d'oxyde de butylène de haut poids moléculaire; les acides gras et leurs dérivés solides à température ambiante, les polymères et résines insolubles de hauts poids moléculaires. La composition objet de la présente invention, peut comprendre une ou plusieurs charges telles que définies ci-dessus.

La composition telle que définie précédemment peut comporter en outre un agent tensioactif. Celui-ci est plus particulièrement choisi parmi les agents mouillants et/ou les agents de suspension, en particulier, les alcools gras alcoxylés, les alcools gras phosphatés, les alcools gras alcoxylés phosphatés, les dérivés acryliques, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés. La composition objet de la présente invention peut comprendre un ou plusieurs agents tensioactifs tels que définis ci-dessus.

La composition telle que définie précédemment peut comporter en outre un sel hydrosoluble. Celui-ci est plus particulièrement choisi parmi les sels à cations alcalins, les sels à cations divalents ou les sels à cations trivalents et plus particulièrement parmi les sels de calcium, de magnésium, de zinc, de fer ou d'aluminium. Parmi ceux-ci, il y a par exemple le chlorure de manganèse, le chlorure de magnésium, le sulfate de magnésium, le chlorure de calcium, le chlorure ferrique. La composition objet de la présente invention peut comprendre un ou plusieurs sels de cation hydrosolubles tels que définis ci-dessus.

Par agent viscosant, on désigne dans la présente invention, tout agent capable, dans les proportions définies ci-dessus, de donner à la composition objet de la présente invention, une rhéologie adaptée à l'utilisation souhaitée en lui procurant de bonnes propriétés d'écoulement et d'étalement sur la surface du verre. Grâce à cet agent viscosant, la composition telle que définie précédemment, a une viscosité à 25 °C, mesurée avec un viscosimètre BROKFIELD™ LVT muni d'un mobile N° 1 tournant à une vitesse de 30 tours par minute (M1, V30) qui est comprise entre 50 et 5000 mPas, plus particulièrement entre 50 et 3000 mPas et de entre 100 et 1000 mPas. La viscosité de la composition telle que définie précédemment peut aussi être caractérisée par un temps d'écoulement mesuré à la coupe N°4 selon la norme NFT 30-014, compris entre 10 secondes et 60 secondes, de préférence entre 14 et 30 secondes.

L'agent viscosant est plus particulièrement choisi parmi les polymères cellulosiques tels que par exemple, la méthyl cellulose, l'éthyl cellulose, l'hydroxyéthyl cellulose, l'hydroxypropyl cellulose, l'hydroxypropylméthyl cellulose, la carboxyméthyl cellulose ou les gommes naturelles et est de préférence une gomme xanthane ou une gomme guar. Comme gomme xanthane commerciales, il y a par exemple le Rhodopol™ 23 ou le Kelzan™. Comme gomme guar commerciale, il y a par exemple le Jaguar™ HP. La composition objet de la présente invention, peut comprendre un ou plusieurs agents viscosants tels que définis ci-dessus.

L'invention a plus particulièrement pour objet une composition caractérisée en ce qu'elle consiste essentiellement pour 100 % de son poids, en :
de 0,025 % à 1,25 % en poids d'au moins un agent viscosant,
de 10 % à 49,975 % en poids d'au moins un composé bifluoré hydrosoluble,
de 0 % à 39,975 % en poids d'une charge insoluble dans l'eau,
de 0 % à 5 % d'au moins un agent tensioactif,
de 0 % à 39,975 % en poids d'au moins un sel hydrosoluble, et
de 50 % à 75 % en poids d'eau ;
et tout particulièrement une composition telle que définie précédemment, caractérisée en ce qu'elle consiste essentiellement pour 100 % de son poids, en :
de 0,1 % à 1 % en poids d'au moins un agent viscosant,
de 25 % à 40 % en poids d'au moins un composé bifluoré hydrosoluble,
de 5 % à 15 % en poids d'une charge insoluble dans l'eau,
de 0 % à 5 % d'au moins un agent tensioactif,
de 0 % à 5 % en poids d'au moins un sel de cation hydrosoluble, et
de 50 % à 75 % en poids d'eau.

Selon un autre aspect, l'invention a pour objet un procédé de préparation d'une composition telle que définie précédemment, caractérisé en ce que l'on mélange à l'eau et sous agitation le générateur d'ions fluorures, l'agent viscosant en une proportion suffisante pour atteindre la viscosité souhaitée, et les éventuels charge insoluble, agent tensioactif et/ou sel hydrosoluble.

Selon un autre aspect, l'invention a pour objet un procédé de préparation d'une composition telle que définie précédemment, caractérisé en ce que l'on mélange sous agitation pour obtenir 100 % de son poids :
- de 25 % à 50 % en poids d'une composition exempte d'eau consistant pour 100 % de son poids, essentiellement en :
   de 0,05 % en poids à 5 % en poids d'au moins un agent viscosant,
   de 20 % à 99,95 % en poids d'au moins un composé bifluoré hydrosoluble,
   de 0 % à 79,95 % en poids d'une charge insoluble dans l'eau,
   de 0 % à 20 % d'au moins un sel de cation hydrosoluble,
- avec de 50 % à 75 % en poids d'eau

L'eau utilisée pour préparer la composition objet de la présente invention est généralement de l'eau de ville dont la température varie de 10 °C à 30 °C environ.

La composition exempte d'eau mise en oeuvre dans le procédé défini ci-dessus constitue aussi un aspect particulier de la présente invention.

Par exempte d'eau, on indique que la composition ne contient pas d'eau ajoutée et que l'eau éventuellement présente n'est substantiellement que de l'eau d'inclusion présente dans un ou l'autre des sels la constituant. En tout état de cause, par exempte d'eau, on entend une composition comprenant moins de 5 % en poids d'eau et de préférence moins de 1 % en poids d'eau.

La composition exempte d'eau telle que définie ci-dessus se présente sous forme de poudres, de granulés, de pastilles ou de galets.

Elle consiste plus particulièrement, pour 100 % de son poids, essentiellement en :
de 0,2 % en poids à 4 % en poids d'au moins un agent viscosant,
de 50 % à 80 % en poids d'au moins un composé bifluoré hydrosoluble,
de 10 % à 30 % en poids d'une charge insoluble dans l'eau, et
de 0 % à 20 % d'au moins un sel de cation hydrosoluble.

La composition aqueuse de dépolissage objet de la présente demande de brevet peut aussi être préparée par introduction dans l'eau et sous agitation de chacun de ses composants. L'agitation est poursuivie jusqu'à l'obtention d'une composition homogène et jusqu'à ce que la température de la préparation soit revenue aux alentours de la température ambiante, soit d'environ 12°C à environ 25°C.

Selon un dernier aspect, l'invention a pour objet un procédé de dépolissage de verre préalablement nettoyé ou décapé, caractérisé en ce qu'il comprend une étape (a) au cours de laquelle la surface de l'objet en verre est mise en contact pendant entre 2 et 20 minutes, de préférence entre 2 et 10 minutes avec la solution telle que définie précédemment. Cette étape (a) est généralement suivie d'une étape (b) de rinçage à l'eau de l'objet dépoli puis si désiré, d'une étape (c) de séchage de l'objet ainsi rincé. Durant les étapes (a) et (b), les compositions de dépolissage et de rinçage peuvent être soit au repos soit agitées par tout moyen mécanique connu : hélices, pâles, brosses, pompes à circulation etc.

Les exemples suivants illustrent l'invention sans toutefois la limiter.

### Exemple 1 (invention)

(a) - Dans un mélangeur à poudres type Turbosphère™, on prépare un mélange sec de poudres constitué de :

| Composants | Pourcentage pondéral |
|---|---|
| Bifluorure d'ammonium | 73 % |
| Sulfate de baryum | 21 % |
| Chlorure de sodium | 1,5 % |
| Chlorure de calcium | 3,5 % |
| Rhodopol™ 23 | 1 % |

Ce mélange se présente sous la forme d'une poudre blanche s'écoulant librement.
(b) - On verse 1 kg de ce mélange dans 1,5 kg d'eau de ville à 25 °C sous agitation lente à 450 tours par minute au moyen d'une hélice marine. L'agitation est maintenue 20 heures de façon à ce que la température du bain se stabilise autour de 25 °C. On obtient un bain parfaitement homogène présentant une viscosité de 520 mPas mesurée au viscosimètre Brookfield™ LVT, muni d'un mobile N° 1 tournant à la vitesse de 30 tours par minute, et un temps d'écoulement de 20 secondes mesuré à la coupe N° 4 selon la norme NFT 30-014. Ce bain est stable, sans sédimentation.
(c) - On verse environ 1 kg de ce bain dans un bac en plastique dans lequel on a déposé une plaque de verre de 2500 cm², dont une des faces est protégée par un film plastique. Après 8 minutes de trempage, on retire la plaque de verre du bain et on la rince abondamment avec de l'eau du robinet à 15 °C pendant 2 minutes, puis on la sèche à l'air et on retire le filme plastique.

On obtient une plaque dépolie sur une face, d'aspect parfaitement homogène et sans défaut. Le dépoli est constitué de "pyramides arrondies" à la surface du verre ayant une hauteur moyenne de 10 µm environ et une largeur de 30 µm à 50 µm. Le verre ne présente pas de trace lorsqu'il est manipulé.

### Exemple 2 (invention)

(a) - Dans 1,3 litres d'eau de ville à 25 °C maintenu sous agitation lente à 450 tours par minute au moyen d'une hélice marine, on verse successivement 730 g de bifluorure d'ammonium, 260 g de fluorure de calcium et 10g de Kelzan standard. L'agitation est maintenue 24 heures de façon à ce que la température du bain se stabilise autour de 25 °C. On obtient un bain parfaitement homogène présentant une viscosité de 1000 mPas mesurée au viscosimètre Brookfield™ LVT, muni d'un mobile N° 1 tournant à la vitesse de 30 tours par minute, et un temps d'écoulement de 34 secondes mesuré à la coupe N° 4 selon la norme NFT 30-014. Ce bain est stable, sans sédimentation.
(b) - On verse environ 1 kg de ce bain dans un bac en plastique dans lequel on a déposé une plaque de verre de 200 cm², dont une des faces est protégée par un film plastique. Après 10 minutes de trempage, on retire la plaque de verre du bain et on la rince abondamment avec de l'eau du robinet à 15 °C pendant 2 minutes, puis on la sèche à l'air et on retire le film plastique.

On obtient une plaque dépolie sur une face, d'aspect parfaitement homogène et sans défaut. Le dépoli est constitué de "pyramides arrondies" à la surface du verre ayant une hauteur moyenne de 9 µm environ et une largeur de 30 µm à 50 µm. Le verre ne présente pas de trace lorsqu'il est manipulé.

### Exemple 3 (état de la technique)

(a) - On répète l'expérience de l'exemple 2 avec un bain de dépolissage ne contenant pas d'épaississant Kelzan. On obtient un bain qui sédimente rapidement et qui, contrairement aux solutions selon l'invention, doit être maintenu sous agitation. Sa viscosité est d'environ 5 mPas, mesurée au viscosimètre Brookfield™ LVT, muni d'un mobile N° 1 tournant à la vitesse de 30 tours par minute. Et son temps d'écoulement dans une coupe AFNOR n°4 est de 9 secondes.
(b) -On verse environ 1 kg de ce bain dans un bac en plastique dans lequel on a déposé une plaque de verre de 200 cm², dont une des faces est protégée par un film plastique. Après 3 minutes de trempage, on retire la plaque de verre du bain et on la rince abondamment avec de l'eau du robinet à 15 °C pendant 2 minutes, puis on la sèche à l'air et on retire le film plastique.

On obtient une plaque dépolie d'aspect hétérogène, formée de "pyramides peu profondes" (4 à 5 µm environ), aux formes moins arrondies que dans l'exemple précédent. Cette structure de surfaces induit des traces de doigts prononcées lorsque le verre est manipulé.

La comparaison des exemples 2 et 3 fait apparaître que les compositions selon l'invention présentent un avantage en termes de qualité du dépolissage par rapport à celles de l'état de la technique. Cet avantage est obtenu sans adjonction d'acide fort dans la solution.

### Exemple 4 (invention)

(a) - Dans un mélangeur à poudres, on prépare un mélange sec constitué de :

| Composants | Pourcentage pondéral |
|---|---|
| Bifluorure d'ammonium | 75 % |
| Charge 1 : Sulfate de baryum | 12 % |
| Charge 2 : Dioxyde de titane | 12 % |
| Tensioactif : Alkylphosphate | 0.1 % |
| Epaississant : Gomme guar | 0.9 % |

Ce mélange se présente sous la forme d'une poudre blanche s'écoulant librement.
(b) - On verse 10 kg de ce mélange dans 15 kg d'eau de ville à 20 °C sous agitation rapide à 1000 tours par minute au moyen d'une pale défloculeuse. L'agitation est maintenue 2 heures puis le bain est laissé au repos jusqu'à ce que la température du bain se stabilise autour de 17 °C. On obtient un bain blanc parfaitement homogène caractérisé par un temps d'écoulement de 20 secondes mesuré à la coupe N° 4 selon la norme NFT 30-014. Ce bain est stable, sans sédimentation.
(c) - On verse environ 10 kg de ce bain dans un bac en plastique dans lequel on a déposé une plaque de verre de 80 X 80 cm, dont une des faces est protégée par un film plastique. Après 8 minutes de trempage, on retire la plaque de verre du bain, on racle sa surface au moyen d'une lame de caoutchouc puis on la rince abondamment avec de l'eau chaude, enfin on la sèche à l'air et on retire le film plastique.

On obtient une plaque dépolie sur une face, d'aspect parfaitement homogène et sans défaut. Le dépoli est constitué de "pyramides" micrométriques, régulièrement réparties à la surface du verre. Le verre ne présente pas de trace lorsqu'il est manipulé.

### Exemple 5 (invention)

(a) - On réalise un bain de dépolissage sans charge insoluble en dispersant successivement dans 3 litres d'eau 1440g de bifluorure d'ammonium et 20g de gomme Guar. L'agitation est réalisée au moyen d'une pale défloculeuse jusqu'à obtention d'un bain homogène. La composition pondérale du bain obtenu est :

| Composants | Pourcentage pondéral |
|---|---|
| Bifluorure d'ammonium | 32.3 % |
| Gomme guar | 0.4 % |
| Eau | 67.3 % |

Ce bain est caractérisé par un temps d'écoulement à la coupe AFNOR n°4 de 15 secondes.
(b) - Une plaque de verre est immergée pendant 8 min dans ce bain puis rincée. Elle possède alors un aspect dépoli homogène. Examinée au microscope, sa surface se présente sous forme d'une juxtaposition de « pyramides » de dimensions voisines de 30 à 50 µm environ.

## Revendications

1. Composition aqueuse comprenant au moins un agent générateur d'ions fluorure et au moins un agent viscosant, **caractérisée en ce que** sa viscosité mesurée à 25 °C avec un viscosimètre BROKFIELD™ LVT muni d'un mobile N°1 tournant à une vitesse de 30 tours par minute, est compris entre 50 et 5000 mPas.

2. Composition telle que définie à la revendication 1, dans laquelle l'agent générateur d'ions fluorure est un composé bifluoré hydrosoluble.

3. Composition telle que définie à la revendication 2, dans laquelle le composé bifluoré hydrosoluble est choisi parmi le bifluorure de sodium, le bifluorure de potassium ou le bifluorure d'ammonium, ou un mélange de deux ou de l'ensemble de ces trois sels.

4. Composition telle que définie à l'une des revendications 2 ou 3, **caractérisée en ce que** lorsqu'elle comprend un mélange de deux ou trois composés bifluorés parmi lesquels est le bifluorure de potassium, ce dernier représente au moins 50% en poids dudit mélange.

5. Composition telle que définie à l'une des revendications 2 à 4, **caractérisée en ce que** lorsqu'elle comprend un mélange de deux ou trois composés bifluorés parmi lesquels est le bifluorure d'ammonium, ce dernier représente au plus 15% en poids et de préférence, au plus 5% en poids dudit mélange.

6. Composition telle que définie à l'une des revendications 1 à 5, **caractérisée en ce qu'**elle comprend au moins une charge insoluble.

7. Composition telle que définie à la revendication 6, **caractérisée en ce que** la charge insoluble, est choisie parmi la baryte, le gypse, les sels fluorés insolubles, et plus particulièrement le fluorure de calcium, les fluorosilicates insolubles et plus particulièrement le fluorosilicate de calcium, de potassium ou le fluorosilicate de sodium, le phosphate de calcium, le sulfate de calcium, les oxydes minéraux, en particulier les oxydes de fer, de zinc, d'aluminium ou de titane, la lignine, l'amidon, les polymères d'oxyde d'éthylène, les polymères d'oxyde de propylène ou les polymères d'oxyde de butylène de haut poids moléculaire ; les acides gras et leurs dérivés solides à température ambiante, les polymères et résines insolubles de hauts poids moléculaires ou parmi un mélange de deux ou de plusieurs de ces composés.

8. Composition telle que définie à l'une des revendications 1 à 7, **caractérisée en ce qu'**elle comprend au moins un agent tensioactif.

9. Composition telle que définie à la revendication 8, **caractérisée en ce que** l'agent tensioactif est choisi parmi les agents mouillants et/ou les agents de suspension, plus particulièrement parmi les alcools gras alcoxylés, les alcools gras phosphatés, les alcools gras alcoxylés phosphatés, les dérivés acryliques, les copolymères d'oxyde d'éthylène et de propylène, les amides grasses ou les agents tensioactifs cationiques ou les dérivés fluorés desdits agents tensioactifs, les agents tensioactifs siliconés ou fluorosiliconés ou parmi un mélange de deux ou de plusieurs de ces composés.

10. Composition telle que définie à l'une des revendications 1 à 9, **caractérisée en ce qu'**elle comprend au moins un sel hydrosoluble choisi parmi les sels à cations alcalins, les sels de cation divalents ou les sel de cations trivalents ou parmi un mélange de deux ou de plusieurs de ces composés et plus particulièrement parmi les sels de calcium, de magnésium, de zinc, de fer ou d'aluminium.

11. Composition telle que définie à la revendication 10, **caractérisée en ce que** le sel hydrosoluble, est choisi parmi le chlorure de manganèse, le chlorure de magnésium, le sulfate de magnésium, le chlorure de calcium, le chlorure ferrique ou un mélange de ces composés.

12. Composition telle que définie à l'une des revendications 1 à 11, **caractérisée en ce que** l'agent viscosant est choisi parmi les polymères cellulosiques, et de préférence, la méthyl cellulose, l'éthyl cellulose, l'hydroxyéthyl cellulose, l'hydroxypropyl cellulose, l'hydroxypropylméthyl cellulose, la carboxyméthyl cellulose ou les gommes naturelles.

13. Composition telle que définie à la revendication 12, **caractérisée en ce que** l'agent viscosant est choisi parmi les gommes naturelles et est de préférence une gomme xanthane ou une gomme guar.

14. Composition telle que définie à l'une des revendications 1 à 13, **caractérisée en ce qu'**elle consiste essentiellement pour 100 % de son poids, en :
de 0,025 % à 1,25 % en poids d'au moins un agent viscosant,
de 10 % à 49,975 % en poids d'au moins un composé bifluoré hydrosoluble,
de 0 % à 39,975 % en poids d'une charge insoluble dans l'eau,
de 0 % à 5 % d'au moins un agent tensioactif,
de 0 % à 39,975 % en poids d'au moins un sel hydrosoluble, et
de 50 % à 75 % en poids d'eau.

15. Composition telle que définie à l'une des revendications 1 à 14, **caractérisée en ce qu'**elle consiste essentiellement pour 100 % de son poids, en :
de 0,1 % à 1 % en poids d'au moins un agent viscosant,
de 25 % à 40 % en poids d'au moins un composé bifluoré hydrosoluble,
de 5 % à 15 % en poids d'une charge insoluble dans l'eau,
de 0 % à 5 % d'au moins un agent tensioactif,
de 0 % à 5 % en poids d'au moins un sel de cation hydrosoluble, et
de 50 % à 75 % en poids d'eau.

16. Procédé de préparation d'une composition telle que défini à l'une des revendications 1 à 15, **caractérisé en ce que** l'on mélange à l'eau et sous agitation le générateur d'ions fluorures, l'agent viscosant en une proportion suffisante pour atteindre la viscosité souhaitée, et les éventuels charge insoluble, agent tensioactif et/ou sel hydrosoluble.

17. Procédé de préparation d'une composition telle que défini à la revendication 15, **caractérisé en ce que** l'on mélange sous agitation pour obtenir 100 % de son poids :
- de 25 % à 50 % en poids d'une composition exempte d'eau consistant pour 100 % de son poids, essentiellement en :
de 0,05 % en poids à 5 % en poids d'au moins un agent viscosant,
de 20 % à 99,95 % en poids d'au moins un composé bifluoré hydrosoluble,
de 0 % à 79,95 % en poids d'une charge insoluble dans l'eau,
de 0 % à 20 % d'au moins un sel hydrosoluble,
- avec de 50 % à 75 % en poids d'eau

18. Composition exempte d'eau consistant pour 100 % de son poids, essentiellement, en :
de 0,05 % en poids à 5 % en poids d'au moins un agent viscosant,
de 20 % à 99,95 % en poids d'au moins un composé bifluoré hydrosoluble,
de 0 % à 79,95 % en poids d'une charge insoluble dans l'eau,
de 0 % à 20 % d'au moins un sel hydrosoluble.

19. Composition exempte d'eau telle que définie à la revendication 1, consistant pour 100 % de son poids, essentiellement en :
de 0,2 % en poids à 4 % en poids d'au moins un agent viscosant,
de 50 % à 80 % en poids d'eau moins un composé bifluoré hydrosoluble,
de 10 % à 30 % en poids d'une charge insoluble dans l'eau, et
de 0 % à 20 % d'au moins un sel hydrosoluble.

20. Procédé de dépolissage de verre **caractérisé en ce qu'**il comprend une étape (a) au cours de laquelle la surface de l'objet en verre est mise en contact pendant entre 2 et 20 minutes, de préférence entre 2 et 10 minutes, avec la solution telle que définie à l'une des revendications 1 à 15.

21. Procédé tel que défini à la revendication 20, dans lequel l'étape (a) est suivie d'une étape (b) de rinçage de l'objet dépoli.
